# EUROPÄISCHE PATENTSCHRIFT

(11) **EP 1 966 742 B1**
(45) Veröffentlichungstag und Bekanntmachung des Hinweises auf die Patenterteilung: **20.02.2013**
(21) Anmeldenummer: 06829697.9
(22) Anmeldetag: 18.12.2006
(51) Int. Cl.: G06K 19/073, G06K 19/077, G06K 19/07

(54) **VORRICHTUNG UND VERFAHREN ZUR PRÜFUNG UND DRAHTLOSEN ÜBERMITTLUNG DES ZUSTANDS EINES SIGNALGEBERS**
APPARATUS AND METHOD FOR CHECKING AND WIRELESSLY TRANSMITTING THE STATE OF A SIGNAL GENERATOR
DISPOSITIF ET PROCEDE POUR LE CONTRÔLE ET LA TRANSMISSION SANS FIL DE L'ETAT D'UN GENERATEUR DE SIGNAUX

(30) Priorität: 20.12.2005 DE 102005061249
(43) Veröffentlichungstag der Anmeldung: 10.09.2008
(73) Patentinhaber: Dynamic Systems GmbH, 82234 Wessling (DE)
(72) Erfinder: LOSSAU, Harald, 81377 München (DE)
(74) Vertreter: Zeuner Summerer Stütz
(86) Internationale Anmeldenummer: PCT/EP2006/012175
(87) Internationale Veröffentlichungsnummer: WO 2007/071354

(56) Entgegenhaltungen:
- EP-A- 1 030 266
- US-A1- 2004 263 319

## Beschreibung

### Technisches Gebiet

Die Erfindung bezieht sich auf eine Prüfeinrichtung zur Prüfung und drahtlosen Übermittlung des Zustands eines Signalgebers, eine Prüfanordnung mit einer Mehrzahl derartiger Prüfeinrichtungen und zugehörige Prüfverfahren.

### Stand der Technik

Zur Identifikation werden seit mehreren Jahren Transponder erfolgreich eingesetzt: Der berührungslose Firmenausweis, der den Zutritt zum Arbeitsplatz freigibt oder die Wegfahrsperre auf Basis eines in den Fahrzeugschlüssel eingebauten Transponders sind typische Beispiele. Dabei erweist sich die Transponder- bzw. RFID-Technologie robuster als herkömmliche Kennzeichnungssysteme, insbesondere Etiketten mit Barcodes: Für verschmutzte, verdeckte oder beschädigte Barcodes stehen trotz einer wachsenden Zahl von eingebauten Redundanzen die Chancen auf Erfassung schlecht. Dagegen bietet die von einer optischen Sichtverbindung unabhängige RFID-Technologie auch bei stark verschmutzten Datenträgern eine konstant hohe Lesequalität. Weitere Vorteile der RFID-Technologie sind die prinzipiell hohen Speicherfähigkeiten (aktuell bis zu 64 kByte), die Möglichkeit der Umprogrammierung und der verschlüsselten Datenübertragung.

Ein Transponder besteht üblicherweise aus einem Koppelelement (Spule oder Mikrowellenantenne) und einem elektronischen Mikrochip. Passive Transponder enthalten keine eigene Spannungsversorgung (Batterie) und verhalten sich außerhalb des Ansprechbereichs eines Lesegeräts vollkommen passiv. Erst innerhalb des Ansprechbereichs eines Lesegeräts wird der Transponder aktiviert. Die zum Betrieb des passiven Transponders benötigte Energie wird ebenso wie Takt und Daten durch die Koppeleinheit kontaktlos zum Transponder übertragen.

Durch Kombination eines Transponders mit einem Sensor ist es möglich neben einer Identifikationsnummer physikalische Messdaten drahtlos zu übertragen [RFID-Forum 06/2004, S.20]. Eingesetzt werden hierbei in der Regel aktive Transponder, also Transponder mit integrierter Batterie, zum eigenständigen Erfassen von Messdaten außerhalb der Reichweite der Lesestation. Messgeräte, die Ihre Messergebnisse per Funk übertragen, werden auch als Telemetriesysteme bezeichnet. Im Gegensatz zu passiven Transpondern sind all diese messenden Systeme aufwändig und teuer in der Herstellung sowie wartungsintensiver aufgrund der eigenen Energieversorgung.

Die Druckschrift US2004/ 0263319 A1, gegen die die unabhängigen Ansprüche abgegrenzt sind, betrifft eine Multimode-Transpondereinrichtung, die als Besonderheit mehrere Antennenschaltkreise aufweist, die jeweils auf einen Betrieb bei unterschiedlichem Leseabstand ausgelegt sind. Dadurch soll dieselbe Transpondereinrichtung für die Kennzeichnung eines Produkts in verschiedenen Stadien von Herstellung, Vertrieb und Verkauf eingesetzt werden können. Beispielsweise sind nach Angaben der US2004/ 0263319 A1 bei der Herstellung oder dem Vertrieb eines Produkts typischerweise relativ große Leseabstände von einigen Metern erforderlich, während später beim Verkauf in einem Laden kleine Leseabstände von einigen Zentimetern erwünscht sind.

Um zwischen den verschiedenen Leseabständen zeitweise oder dauerhaft umschalten zu können, ist bei der in der US2004/ 0263319 A1 beschriebenen Transpondereinrichtung zumindest eine Deaktivierungsschaltung vorgesehen, die zumindest einen der Antennenschaltkreise abschalten kann. Die zusätzlichen Antennenschaltkreise können dabei je nach gewünschtem Leseabstand abgeschaltet werden, es können jedoch auch mehrere oder sogar alle Antennenschaltkreise gleichzeitig in Funktion sein. Die Abschaltung einzelner Antennenschaltkreise kann beispielsweise auch aus Gründen der Geheimhaltung bestimmter Informationen zu bestimmten Zeiten erfolgen.

Die Druckschrift EP 1 030 266 A2 offenbart kontaktlose IC-Karten mit einer Antenne zum Empfangen elektromagnetischer Energie von einer externen Vorrichtung, einem integrierten Schaltkreis, der durch die empfangene Energie betrieben wird und einem Schalter, mit der die Antennenspule außer Funktion gesetzt werden kann. Das Abschalten der Antenne dient dem Schutz der im IC gespeicherten Information und soll das Nach-Außendringen jeglicher Information vermeiden.

### Darstellung der Erfindung

Hier setzt die Erfindung an. Der Erfindung, wie sie in den Ansprüchen gekennzeichnet ist, liegt die Aufgabe zugrunde, die Nachteile des Stands der Technik zu vermeiden und insbesondere eine einfache und kostengünstige Prüfeinrichtung anzugeben, mit der zum einen der Zustand eines Signalgebers, wie etwa eines Druckschalters überwacht werden kann und mit der zum anderen zugleich der Gegenstand, der mit Prüfeinrichtung versehen ist, gekennzeichnet werden kann.

Diese Aufgabe wird erfindungsgemäß durch die Prüfeinrichtung mit den Merkmalen des Hauptanspruchs gelöst. Eine Prüfanordnung und zugehöriger Prüfverfahren sind in den nebengeordneten Ansprüchen angegeben. Weitere vorteilhafte Details, Aspekte und Ausgestaltungen der vorliegenden Erfindung ergeben sich aus den abhängigen Ansprüchen, der Beschreibung, den Figuren und den Beispielen.

Im Rahmen der vorliegenden Erfindung werden die folgenden Abkürzungen und Begriffe benutzt:
Die Abkürzung RFID (Radio Frequency Identification) wird hier allgemein für Identifkationssysteme mit kontaktloser elektromagnetischer Energie- und Datenübertragung verwendet - unabhängig von der eingesetzten Trägerfrequenz.

Unter Transponderauslesegerät wird ein System verstanden, das über elektromagnetische Felder einen Transponder mit Energie versorgen, Daten aus dessen Chip auslesen und optional auch Daten auf den Chip schreiben kann.

Gemäß der Erfindung weist eine Prüfeinrichtung zur Prüfung und drahtlosen Übermittlung des Zustands eines Signalgebers die Merkmale des Anspruchs 1 auf.

Die vorgeschlagene Lösung ist wesentlich einfacher und kostengünstiger als der grundsätzlich ebenfalls mögliche Einsatz von passiven Transpondern mit Sensoreingang, die Messdaten nur innerhalb der Reichweite der Lesestation erfassen und direkt übermitteln, und die aufgrund der aufwändigeren Signalverarbeitung im Transponderchip und den wesentlich geringeren Produktionsmengen wesentlich teurer sind, als die in Massenproduktion hergestellten Standardtransponder, die für die vorliegende Prüfeinrichtung zum Einsatz kommen können.

Vorzugsweise enthält der Transponder eine eindeutige Kennung, insbesondere eine Seriennummer, die den Transponder und damit die Prüfeinrichtung eindeutig kennzeichnet.

In einer ersten, bevorzugten Erfindungsvariante ist der Signalgeber im Bereich der Kontaktstellen zwischen Transponderchip und Antenne angeschlossen, wobei der Signalgeber in einem niedrigohmigen Zustand die Koppelantenne des Transponders kurzschließt und dadurch den Transponder außer Funktion setzt, und in einem hochohmigen Zustand die Funktion des Transponders im Wesentlichen unbeeinträchtigt lässt.

Die Koppelantenne des Transponders kann dabei insbesondere aus Kupfer bestehen und die Anschlussleitungen zum Signalgeber an die Antenne im Bereich ihrer Anschlüsse an den Transponderchip angelötet sein.

Bei einer weiteren, ebenfalls bevorzugten Erfindungsvariante ist der Signalgeber in die Koppelantenne eingefügt, wobei der Signalgeber in einem niedrigohmigen Zustand die Koppelantenne und damit den Transponder in Funktion setzt, und in einem hochohmigen Zustand die Koppelantenne unterbricht und den Transponder außer Funktion setzt.

In allen Erfindungsvarianten kann vorgesehen sein, dass der Transponder in Etikettform ausgebildet ist. Insbesondere kann der Transponder flexibel ausgeführt sein.

Der Signalgeber ist mit Vorteil ausgewählt aus der Gruppe bestehend aus einem Schalter, einem Temperatursensor, insbesondere einem Bimetall-Schalter oder einem Thermowiderstand, einem lichtempfindlichen Sensor, insbesondere einem Photowiderstand oder einer Photodiode, einem Drucksensor, einem Füllstandssensor, einem Leitfähigkeitssensor und einem Feuchtesensor.

In einer bevorzugten Ausgestaltung der Prüfeinrichtung ist der Transponder für die Anwendung eines Verfahrens zur individuellen Erkennung eingerichtet. In manchen Anwendungen kann es auch von Vorteil sein, wenn der Transponder für eine gesicherte Datenübertragung, insbesondere über Identifizierungs- oder Autorisierungsprotokolle, eingerichtet ist.

Zweckmäßig ist der Transponder auf eine Arbeitsfrequenz zwischen 9 und 135 kHz, vorzugsweise zwischen 100 und 135 kHz ausgelegt. Alternativ kann der Transponder auf eine Arbeitsfrequenz im ISM-Frequenzbereich, insbesondere auf eine Arbeitsfrequenz um 6,78 MHz, 13,56 MHz, 27,125 MHz, 40,68 MHz, 433,92 MHz, 869,0 MHz, 915,0 MHz, 2,45 GHz, 5,8 GHz oder 24,125 GHz, und besonders bevorzugt auf eine Arbeitsfrequenz um 13,56 MHz ausgelegt sein.

Der Transponder kann insbesondere Daten enthalten, wie eine Identifikationsnummer, Spezifikation der Prüfeinrichtung, Position der Prüfeinrichtung, Spezifikation eines Prüflings, durchgeführte oder durchzuführende Verarbeitungsschritte, durchlaufene oder zu durchlaufende Verarbeitungsstationen, Aufenthaltsorte und Zeiten, physikalische Messgrößen, wie Temperatur, Druck, Füllstand, Beschleunigung, vom an den Transponder angeschlossenen Signalgeber, Herstellungsdatum der Prüfeinrichtung, Bedienungsanleitung oder Steuerungscode für Verarbeitungssysteme.

Die Erfindung enthält auch einen Behälter mit einer Prüfeinrichtung der vorgenannten Art, wobei der Transponder der Prüfeinrichtung gleichzeitig zur Kennzeichnung des Behälters oder dessen Inhalts eingerichtet ist, insbesondere dadurch, dass er mit einer eindeutigen Identifikationsnummer versehen ist.

Die Erfindung enthält weiter eine Prüfanordnung mit einer Mehrzahl von Prüfeinrichtung en der oben beschrieben Art. Dabei können die Transponder der Prüfeinrichtungen beispielsweise auf sequentielles Auslesen durch das Lesefeld eines Transponderauslesegeräts eingerichtet sein. In andere Ausgestaltungen sind die Transponder der Prüfeinrichtungen auf gleichzeitige Anordnung im Lesefeld eines Transponderauslesegerät und Auslesen durch ein Antikollisionsverfahren eingerichtet.

Die Erfindung umfasst ferner ein Verfahren zum Prüfen und Übermitteln des Zustands eines Signalgebers, der zumindest zwei Zustände einnehmen kann, nach Anspruch 12.

Zum Prüfen einer Prüfanordnung mit einer Mehrzahl von Prüfeinrichtungen der oben beschriebenen Art können die Prüfeinrichtungen sequentiell in das Lesefeld eines Transponderauslesegeräts gebracht und mit dem eben genannten Prüfverfahren ausgelesen werden. Alternativ können mehrere Prüfeinrichtungen gleichzeitig im Lesefeld eines Transponderauslesegeräts angeordnet sein und mittels eines Antikollisionsverfahrens mit dem genannten Prüfverfahren ausgelesen werden.

Nachfolgend soll die Erfindung anhand von Ausführungsbeispielen im Zusammenhang mit den Zeichnungen näher erläutert werden. Dabei sind nur die für das Verständnis der Erfindung wesentlichen Elemente dargestellt. Es zeigen:
- Figur 1: eine Prüfeinrichtung auf Basis eines Standardtransponders
- Figur 2: eine Prüfeinrichtung nach einem Ausführungsbeispiel der Erfindung, die eine Plausibilitätskontrolle des Prüfergebnisses ermöglicht.

### Wege zur Ausführung der Erfindung

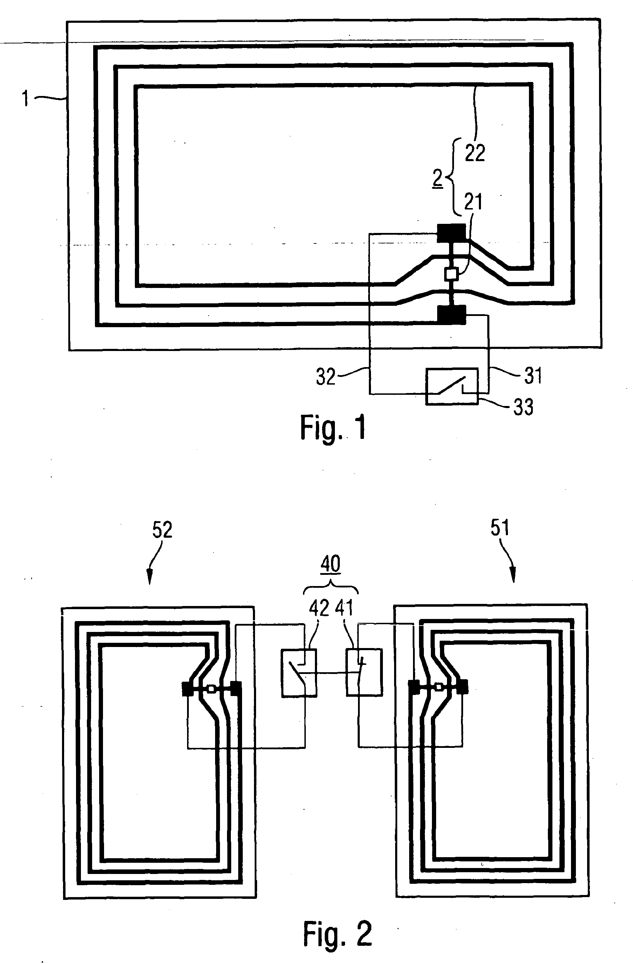

Zunächst wird mit Bezug auf die Figur 1 ein Etikett mit einem Transponder 2 erläutert, der mit Hilfe eines Schalters 33 eingeschaltet bzw. ausgeschaltet werden kann.

Dabei bezeichnet das Bezugszeichen 1 das Etikettensubstrat, auf dem der Transponder 2 mit Transponderchip 21 - hier als Chipmodul - und Antenne 22 aufgebracht ist. Ein derartiger Aufbau ist als RFID-Etikett oder "smart label" bekannt und wird kommerziell in großen Stückzahlen hergestellt.

Dieses RFID-Etikett wird über zwei isolierte Anschlussdrähte 31, 32 mit einem Schalter bzw. Signalgeber 33 so verbunden, dass der Transponder bei geschlossenem Schalter deaktiviert ist, während er bei offenem Schalter voll funktionsfähig ist. Dies wird durch eine Kontaktierung der Anschlussdrähte 31, 32 im Bereich der Anschlusspunkte der Antenne 22 an das Chipmodul erreicht. Dadurch lassen sich Antenne und Chip bei geschlossenem Schalter kurzschließen - der Transponder ist deaktiviert. Andererseits wird die Funktionsfähigkeit des Transponders bei offenem Schalter nur unwesentlich beeinträchtigt.

Ein wesentliches Merkmal ist die Tatsache, dass es einen Zustand des Signalgebers gibt, nämlich den hochohmigen Zustand, in dem der Transponder 2 voll funktionsfähig ist und möglichst wenig durch die Zuleitungen zum Signalgeber beeinträchtigt wird.

Im gezeigten Beispiel wird dies dadurch erreicht, dass a) die Geometrie des Transponders 2 an sich durch die Montage des Signalgebers nicht verändert wird, b) ein Transponder verwendet wird, der mit induktiver Kopplung - über eine spulenförmige Antenne - besonders bevorzugt bei 13,56 MHz arbeitet und c) die Anschlussdrähte möglichst kurz im Verhältnis zur Länge der Antennenleiterbahn ausgeführt sind.

Der Signalgeber kann beispielsweise in ein (mobiles) Prüfsystem integriert sein, die das Vorhandensein und den mechanischen Kontakt eines Prüflings feststellen soll. Je nach Anforderung an das Prüfsystem kann durch den mechanischen Kontakt ein Schalter geschlossen oder geöffnet - und entsprechend der Transponder deaktiviert oder aktiviert - werden. Der Zustand kann dann drahtlos über die Prüfeinrichtung ausgelesen werden.

Ein besonderer Vorteil dieser Vorgehensweise liegt darin, dass das Prüfsystem ohne Verkabelung und damit flexibel ausgestaltet werden kann. Dies ist insbesondere dann von Vorteil, wenn das Prüfsystem eine große Anzahl von Prüfstellen aufweist, die an variablen Positionen angeordnet sein müssen. Jede Prüfstelle muss dann jeweils nur eine Prüfeinrichtung mit einem Transponder mit eindeutiger Kennzeichnung (Seriennummer) enthalten, der über ein einheitliches Lesegerät, beispielsweise über einen Scan-Vorgang ausgelesen werden kann.

Bei hohen Qualitäts- bzw. Sicherheitsanforderungen an das Prüfergebnis kann der Signalgeber 40, wie in Fig. 2 gezeigt, auch aus zwei Schaltern, einem Öffner 41 und einem Schließer 42 - bestehen, die jeweils nach dem erfindungsgemäßen Aufbau an einen Transponder 51 bzw. 52 angeschlossen sind. Bei dieser Ausführungsvariante ist eine Plausibilitätskontrolle des Prüfergebnisses möglich, da in jedem Fall immer ein Transponder pro Prüfstelle auslesbar sein muss.

Ist der Transponder - wie in den Ausführungsbeispielen beschrieben - als Etikett ausgeführt, so kann dieses RFID-Etikett direkt an geeigneter Stelle auf das Prüfsystem geklebt werden. Ist eine stabilere Ausführung erforderlich, so kann beispielsweise a) der Aufbau gekapselt werden, b) das RFID-Etikett auf eine Karte bzw. ein robustes Substrat geklebt und zwischen Karte und Prüfsystem geschützt angeordnet werden oder c) der Aufbau von vorneherein direkt in einer Chipkarte oder einem anderen sogenannten Hard-Tag, also einem robusteren Transpondertyp, realisiert werden.

Während die Erfindung insbesondere mit Bezug auf bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

## Patentansprüche

1. Prüfeinrichtung zur Prüfung und drahtlosen Übermittlung des Zustands eines Signalgebers (40), mit
- einem ersten passiven Transponder (51) mit einem Transponderchip und einer Koppelantenne,
- einem Signalgeber (40), der zwei Zustände einnehmen kann, wobei
- der Signalgeber (40) elektrisch so mit der Koppelantenne des ersten Transponders (51) verbunden ist, dass der ersten Transponder (51) in einem ersten Zustand des Signalgebers (40) außer Funktion gesetzt ist, und die Funktion des ersten Transponders (51) in einem zweiten Zustand des Signalgebers (40) im Wesentlichen unbeeinträchtigt ist, und
- neben dem ersten Transponder (51) ein weiterer passiver Transponder (52) mit einem Transponderchip und einer Koppetantenne vorgesehen ist, und der Signalgeber (40) elektrisch so mit der Koppelantenne des weiteren Transponders (52) verbunden ist, dass der weitere Transponder (52) in dem zweiten Zustand des Signalgebers (40) außer Funktion gesetzt ist, und die Funktion des weiteren Transponders (52) in dem ersten Zustand des Signalgebers (40) im Wesentlichen unbeeinträchtigt ist, und wobei
- der Signalgeber (40) aus einem Öffner-Schließer-Paar (41, 42) besteht, welche derart miteinander und mit den Koppelantennen des ersten und zweiten Transponders (51, 52) verbunden sind, dass in jedem Fall immer einer der beiden Transponder (51, 52) auslesbar ist.

2. Prüfeinrichtung nach Anspruch 1, **dadurch gekennzeichnet, dass** mindestens einer der Transponder (51, 52) eine eindeutige Kennung, insbesondere eine Seriennummer, enthält, die den Transponder (51, 52) und damit die Prüfeinrichtung eindeutig kennzeichnet.

3. Prüfeinrichtung nach Anspruch 1 oder 2, **dadurch gekennzeichnet, dass** der Signalgeber (40) im Bereich der Kontaktstellen zwischen Transponderchip und Antenne angeschlossen ist, und dass der Signalgeber (40) in einem niedrigohmigen Zustand die Koppelantenne des ersten Transponders (51) kurzschließt und dadurch den ersten Transponder (51) außer Funktion setzt, und in einem hochohmigen Zustand die Funktion des ersten Transponders (51) im Wesentlichen unbeeinträchtigt lässt.

4. Prüfeinrichtung nach Anspruch 3, **dadurch gekennzeichnet, dass** die Koppelantenne mindestens eines der Transponder (51, 52) aus Kupfer besteht und die Anschlussleitungen zum Signalgeber an die Antenne im Bereich ihrer Anschlüsse an den Transponderchip angelötet sind.

5. Prüfeinrichtung nach Anspruch 1 oder 2, **dadurch gekennzeichnet, dass** der Signalgeber in die Koppelantenne eingefügt ist, und dass der Signalgeber in einem niedrigohmigen Zustand die Koppelantenne und damit den ersten Transponder (51) in Funktion setzt, und in einem hochohmigen Zustand die Koppelantenne unterbricht und den ersten Transponder (51) außer Funktion setzt.

6. Prüfeinrichtung nach einem der vorhergehenden Ansprüche, **dadurch gekennzeichnet, dass** die Transponder (51, 52) in Etikettform ausgebildet sind.

7. Prüfeinrichtung nach einem der vorhergehenden Ansprüche, **dadurch gekennzeichnet, dass** die Transponder (51, 52) auf eine Arbeitsfrequenz zwischen 9 und 135 kHz, vorzugsweise zwischen 100 und 135 kHz, oder auf eine Arbeitsfrequenz im ISM-Frequenzbereich, insbesondere auf eine Arbeitsfrequenz um 6,78 MHz, 13,56 MHz, 27,125 MHz, 40,68 MHz, 433,92 MHz, 869,0 MHz, 915,0 MHz, 2,45 GHz, 5,8 GHz oder 24,125 GHz, und besonders bevorzugt auf eine Arbeitsfrequenz um 13,56 MHz ausgelegt sind.

8. Behälter mit einer Prüfeinrichtung nach einem der Ansprüche 1 bis 7, wobei zumindest einer der Transponder (51, 52) gleichzeitig zur Kennzeichnung des Behälters oder dessen Inhalts eingerichtet ist, insbesondere dadurch, dass er mit einer eindeutigen Identifikationsnummer versehen ist.

9. Prüfanordnung mit einer Mehrzahl von Prüfeinrichtungen nach einem der Ansprüche 1 bis 7.

10. Prüfanordnung nach Anspruch 9, **dadurch gekennzeichnet, dass** die Transponder (51, 52) der Prüfeinrichtungen auf sequentielles Auslesen durch das Lesefeld eines Transponderauslesegeräts eingerichtet sind.

11. Prüfanordnung nach Anspruch 9, **dadurch gekennzeichnet, dass** die Transponder (51, 52) der Prüfeinrichtungen auf gleichzeitige Anordnung im Lesefeld eines Transponderauslesegerät und Auslesen durch ein Antikollisionsverfahren eingerichtet sind.

12. Verfahren zum Prüfen und Übermitteln des Zustands eines Signalgebers, der zumindest zwei Zustände einnehmen kann, bei dem
- ein erster und zweiter passiver Transponder (51, 52), jeweils mit einem Transponderchip und einer Koppelantenne bereitgestellt werden,
- der Signalgeber (40) elektrisch so mit der Koppelantenne des ersten Transponders (51) verbunden wird, dass der erste Transponder (51) in einem ersten Zustand des Signalgebers (40) außer Funktion gesetzt wird, und die Funktion des ersten Transponders (51) in einem zweiten Zustand des Signalgebers (40) im Wesentlichen unbeeinträchtigt bleibt,
- der Signalgeber (40) elektrisch so mit der Koppelantenne des zweiten Transponders (52) verbunden wird, dass der zweite Transponder (52) in dem zweiten Zustand des Signalgebers (40) außer Funktion gesetzt wird, und die Funktion des zweiten Transponders (52) in dem ersten Zustand des Signalgebers (40) im Wesentlichen unbeeinträchtigt bleibt,
- der Signalgeber (40) aus einem Öffner-Schließer-Paar (41, 42) gebildet wird, welche derart miteinander und mit den Koppelantennen des ersten und zweiten Transponders (51, 52) verbunden werden, dass in jedem Fall immer einer der beiden Transponder (51, 52) auslesbar ist,
- versucht wird, zumindest einen der Transponder (51, 52) mit einem Transponderlesegerät auszulesen, und
- auf Grundlage des Erfolgs oder Nichterfolgs des Ausleseversuchs auf den Zustand des Signalgebers (40) geschlossen wird.

13. Verfahren zum Prüfen einer Prüfanordnung mit einer Mehrzahl von Prüfeinrichtungen nach einem der Ansprüche 1 bis 7, bei dem die Prüfeinrichtungen sequentiell in das Lesefeld eines Transponderauslesegeräts gebracht und mit dem Prüfverfahren nach Anspruch 12 ausgelesen werden.

14. Verfahren zum Prüfen einer Prüfanordnung mit einer Mehrzahl von Prüfeinrichtung nach einem der Ansprüche 1 bis 7, bei dem mehrere Prüfeinrichtungen gleichzeitig im Lesefeld eines Transponderauslesegeräts angeordnet sind und mittels eines Antikollisionsverfahrens mit dem Prüfverfahren nach Anspruch 12 ausgelesen werden.

## Claims

1. A testing device for testing and wirelessly transmitting the state of a signal generator (40), having
- a first passive transponder (51) having a transponder chip and a coupling antenna,
- a signal generator (40) that can take on two states,
- the signal generator (40) being electrically connected with the coupling antenna of the first transponder (51) in such a way that the first transponder (51) is rendered non-functional in a first state of the signal generator (40), and the function of the first transponder (51) is substantially unimpaired in a second state of the signal generator (40), and
- in addition to the first transponder (51), a further passive transponder (52) having a transponder chip and a coupling antenna being provided, and the signal generator (40) being electrically connected with the coupling antenna of the further transponder (52) in such a way that the further transponder (52) is rendered non-functional in the second state of the signal generator (40), and the function of the further transponder (52) is substantially unimpaired in the first state of the signal generator (40), and
- the signal generator (40) consisting of an opener-closer pair (41, 42) that are connected with each other and with the coupling antenna of the first and second transponder (51, 52) in such a way that, in any case, one of the two transponders (51, 52) is always readable.

2. The testing device according to claim 1, **characterized in that** at least one of the transponders (51, 52) includes an unambiguous identifier, especially a serial number, that unambiguously identifies the transponder (51, 52) and thus the testing device.

3. The testing device according to claim 1 or 2, **characterized in that** the signal generator (40) is connected in the region of the contact sites between the transponder chip and the antenna, and **in that**, in a low-ohm state, the signal generator (40) short-circuits the coupling antenna of the first transponder (51) and, in this way, renders the first transponder (51) non-functional, and in a high-ohm state, leaves the function of the first transponder (51) substantially unimpaired.

4. The testing device according to claim 3, **characterized in that** the coupling antenna of at least one of the transponders (51, 52) consists of copper and the connecting leads to the signal generator are soldered to the antenna in the region of its connections to the transponder chip.

5. The testing device according to claim 1 or 2, **characterized in that** the signal generator is inserted into the coupling antenna, and **in that**, in a low-ohm state, the signal generator renders the coupling antenna and thus the first transponder (51) functional, and in a high-ohm state, interrupts the coupling antenna and renders the first transponder (51) non-functional.

6. The testing device according to one of the preceding claims, **characterized in that** the transponders (51, 52) are developed to be in label form.

7. The testing device according to one of the preceding claims, **characterized in that** the transponders (51, 52) are designed for an operating frequency between 9 and 135 kHz, preferably between 100 and 135 kHz, or for an operating frequency in the ISM frequency range, especially for an operating frequency around 6.78 MHz, 13.56 MHz, 27.125 MHz, 40.68 MHz, 433.92 MHz, 869.0 MHz, 915.0 MHz, 2.45 GHz, 5.8 GHz or 24.125 GHz, and particularly preferably for an operating frequency around 13.56 MHz.

8. A container having a testing device according to one of claims 1 to 7, at least one of the transponders (51, 52) simultaneously being set up to identify the container or its contents, especially in that it is provided with an unambiguous identification number.

9. A testing arrangement having a plurality of testing devices according to one of claims 1 to 7.

10. A testing arrangement according to claim 9, **characterized in that** the transponders (51, 52) of the testing devices are set up for sequential reading through the reading field of a transponder reading device.

11. A testing arrangement according to claim 9, **characterized in that** the transponders (51, 52) of the testing devices are set up for simultaneous arrangement in the reading field of a transponder reading device and reading through an anti-collision method.

12. A method for testing and transmitting the state of a signal generator that can take on at least two states, in which
- a first and second passive transponder (51, 52), each having a transponder chip and a coupling antenna, are provided,
- the signal generator (40) is electrically connected with the coupling antenna of the first transponder (51) in such a way that the first transponder (51) is rendered non-functional in a first state of the signal generator (40), and the function of the first transponder (51) remains substantially unimpaired in a second state of the signal generator (40),
- the signal generator (40) is electrically connected with the coupling antenna of the second transponder (52) in such a way that the second transponder (52) is rendered non-functional in the second state of the signal generator (40), and the function of the second transponder (52) remains substantially unimpaired in the first state of the signal generator (40),
- the signal generator (40) is formed from an opener-closer pair (41, 42) that are connected with each other and with the coupling antennas of the first and second transponder (51, 52) in such a way that, in any case, one of the two transponders (51, 52) is always readable,
- it is attempted to read at least one of the transponders (51, 52) with a transponder reading device, and
- the state of the signal generator (40) is deduced on the basis of the success or non-success of the reading attempt.

13. A method for testing a testing arrangement having a plurality of testing devices according to one of claims 1 to 7, in which the testing devices are brought into the reading field of a transponder reading device sequentially and read with the testing method according to claim 12.

14. A method for testing a testing arrangement having a plurality of testing devices according to one of claims 1 to 7, in which multiple testing devices are simultaneously arranged in the reading field of a transponder reading device and are read by means of an anti-collision method with the testing method according to claim 12.

## Revendications

1. Dispositif d'essai pour l'essai et la transmission sans fil de l'état d'un générateur de signal (40), avec
- un premier transpondeur passif (51), comportant une puce de transpondeur et une antenne de couplage,
- un générateur de signal (40), qui peut prendre deux états, où
- le générateur de signal (40) est électriquement relié à l'antenne de couplage du premier transpondeur (51) de telle sorte que le premier transpondeur (51) soit mis hors fonction dans un premier état du générateur de signal (40), la fonction du premier transpondeur (51) restant, dans un deuxième état du générateur de signal (40), pour l'essentiel non affectée, et
- outre le premier transpondeur (51), il est prévu un transpondeur passif supplémentaire (52), comportant une puce de transpondeur et une antenne de couplage, et le générateur de signal (40) est électriquement relié à l'antenne de couplage du transpondeur supplémentaire (52) de telle sorte que le transpondeur supplémentaire (52) soit mis hors fonction dans le deuxième état du générateur de signal (40), la fonction du transpondeur supplémentaire (52) étant pour l'essentiel non affectée dans le premier état du générateur de signal (40), et
- le générateur de signal (40) étant constitué d'une paire contact à ouverture /contact à fermeture (41, 42), qui sont reliés l'un à l'autre et aux antennes de couplage du premier et du deuxième transpondeurs (51, 52) de telle sorte que, dans chaque cas, une lecture puisse toujours être faite de l'un des deux transpondeurs (51, 52).

2. Dispositif d'essai selon la revendication 1, **caractérisé en ce qu'**au moins l'un des transpondeurs (51, 52) contient une identification non ambiguë, en particulier un numéro de série, qui caractérise sans ambiguïté le transpondeur (51, 52) et donc le dispositif d'essai.

3. Dispositif d'essai selon la revendication 1 ou 2, **caractérisé en ce que** le générateur de signal (40) est, dans la zone des points de contact, raccordé entre la puce du transpondeur et l'antenne, et que le générateur de signal (40), dans un état à faible résistance ohmique, va court-circuiter l'antenne de couplage du premier transpondeur (51), en mettant de ce fait le premier transpondeur (51) hors fonction, la fonction du premier transpondeur (51) restant, dans un état à grande résistance ohmique, pour l'essentiel non affectée.

4. Dispositif d'essai selon la revendication 3, **caractérisé en ce que** l'antenne de couplage d'au moins l'un des transpondeurs (51, 52) est constituée de cuivre, et les lignes de raccordement allant vers le générateur de signal sont assemblées par brasage à l'antenne dans la zone de ses raccordements à la puce du transpondeur.

5. Dispositif d'essai selon la revendication 1 ou 2, **caractérisé en ce que** le générateur de signal est inséré dans l'antenne de couplage, et que le générateur de signal, dans un état à faible résistance ohmique, met hors fonction l'antenne de couplage et donc le premier transpondeur (51), et, dans un état à grande résistance ohmique, interrompt l'antenne de couplage et met hors fonction le premier transpondeur (51).

6. Dispositif d'essai selon l'une des revendications précédentes, **caractérisé en ce que** les transpondeurs (51, 52) sont configurés sous forme d'étiquettes.

7. Dispositif d'essai selon l'une des revendications précédentes, **caractérisé en ce que** les transpondeurs (51, 52) sont configurés à une fréquence de fonctionnement comprise entre 9 et 135 kHz, de préférence entre 100 et 135 kHz, ou à une fréquence de fonctionnement dans la plage de fréquences ISM, en particulier à une fréquence de fonctionnement de 6,78 MHz, 13,56 MHz, 27,125 MHz, 40,68 MHz, 433,92 MHz, 869,0 MHz, 915,0 MHz, 2,45 GHz, 5,8 GHz ou 24,125 GHz et d'une manière particulièrement préférée à une fréquence de fonctionnement de 13,56 MHz.

8. Contenant comportant un dispositif d'essai selon l'une des revendications 1 à 7, dans lequel au moins l'un des transpondeurs (51, 52) est simultanément aménagé pour caractériser le contenant ou son contenu, en particulier par le fait qu'il est pourvu d'un numéro d'identification non ambigu.

9. Arrangement d'essai comportant une pluralité de dispositifs d'essai selon l'une des revendications 1 à 7.

10. Arrangement d'essai selon la revendication 9, **caractérisé en ce que** les transpondeurs (51, 52) des dispositifs d'essai sont aménagés pour permettre une lecture séquentielle par la zone de lecture d'un appareil de lecture de transpondeurs.

11. Arrangement d'essai selon la revendication 9, **caractérisé en ce que** les transpondeurs (51, 52) des dispositifs d'essai sont aménagés pour un arrangement simultané dans la zone de lecture d'un appareil de lecture de transpondeur, et une lecture par un processus anti-collision.

12. Procédé pour contrôler et transmettre l'état d'un générateur de signal, qui peut prendre au moins deux états, dans lequel
- on met à disposition un premier et un deuxième transpondeurs passifs (51, 52), comportant chacun une puce de transpondeur et une antenne de couplage,
- on relie électriquement le générateur de signal (40) à l'antenne de couplage du premier transpondeur (51) de telle sorte que le premier transpondeur (51) soit, dans un premier état du générateur de signal (40), mis hors fonction, et que la fonction du premier transpondeur (51), dans un deuxième état du générateur de signal (40), reste pour l'essentiel non affectée,
- on relie électriquement le générateur de signal (40) à l'antenne de couplage du deuxième transpondeur (52) de telle sorte que le deuxième transpondeur (52), dans le deuxième état du générateur de signal (40), soit mis hors fonction, et que la fonction du deuxième transpondeur (52), dans le premier état du générateur de signal (40), reste pour l'essentiel non affectée,
- on forme le générateur de signal (40) à partir d'une paire contact à ouverture - contact de fermeture (41, 42), qui sont reliés l'un à l'autre et aux antennes de couplage du premier et du deuxième transpondeurs (51, 52) de façon à permettre dans chaque cas toujours la lecture de l'un des deux transpondeurs (51, 52),
- on tente de lire au moins l'un des transpondeurs (51, 52) avec un appareil de lecture de transpondeurs, et
- sur la base du succès ou de l'échec de l'essai de lecture, on tire une conclusion quant à l'état du générateur de signal (40).

13. Procédé pour le contrôle d'un arrangement d'essai comportant une pluralité de dispositifs d'essai selon l'une des revendications 1 à 7, dans lequel les dispositifs d'essai sont placés séquentiellement dans la zone de lecture d'un appareil de lecture de transpondeurs, et sont lus par la méthode d'essai selon la revendication 12.

14. Procédé pour le contrôle d'un arrangement d'essai comportant une pluralité de dispositifs d'essai selon l'une des revendications 1 à 7, dans lequel plusieurs dispositifs d'essai sont disposés simultanément dans la zone de lecture d'un appareil de lecture de transpondeurs et, à l'aide d'un processus anti-collision, sont lus par la méthode d'essai selon la revendication 12.
